# FASCICULE DE BREVET EUROPEEN

(11) **EP 1 937 524 B1**
(45) Date de publication et mention de la délivrance du brevet: **28.05.2014**
(21) Numéro de dépôt: 06792202.1
(22) Date de dépôt: 21.09.2006
(51) Int. Cl.: B60S 1/40

(54) **CONNECTEUR DE MONTAGE ET D'ARTICULATION D'UN BALAI D'ESSUYAGE SUR L'EXTREMITE D'UN BRAS D'ENTRAINEMENT**
VERBINDER ZUM MONTIEREN UND VERBINDEN EINES WISCHBLATTES MIT EINEM ANTRIEBSARMENDE
CONNECTOR FOR MOUNTING AND JOINTING A WIPER BLADE TO A DRIVING ARM END

(30) Priorité: 21.09.2005 FR 0509616
(43) Date de publication de la demande: 02.07.2008
(73) Titulaire: VALEO SYSTEMES D'ESSUYAGE, 78321 La Verrière (FR)
(72) Inventeur: THIENARD, Jean-Claude, F-76200 Dieppe (FR); BOUSSICOT, Frédéric, F-78700 Conflans Saint Honorine (FR)
(86) Numéro de dépôt international: PCT/EP2006/009185
(87) Numéro de publication internationale: WO 2007/033827

(56) Documents cités:
- EP-A- 1 403 156
- EP-A- 1 541 434
- WO-A-03/084789
- WO-A-2004/048163
- WO-A-2004/098962
- WO-A1-02/40328
- DE-A1- 10 347 637
- FR-A1- 2 781 741

## Description

L'invention propose un connecteur (10) d'un balai (12) d'essuyage à un bras d'entraînement (14), selon la revendication 1.

Le document EP-A-1.403.156 décrit un connecteur qui est monté sur un élément de montage d'un balai par emboîtement élastique.

Pour cela, les flasques latéraux du connecteur sont aptes à être déformés élastiquement par écartement transversal l'un de l'autre lors du montage du connecteur pour permettre l'introduction des axes de l'élément de montage. Les flasques du connecteur sont en outre aptes à reprendre élastiquement leur position initiale lorsque le connecteur est en position montée sur l'élément de liaison.

Un tel emboîtement élastique du connecteur sur l'élément de liaison oblige l'utilisateur à exercer des efforts relativement importants pour provoquer l'écartement des flasques du connecteur et risque de détériorer le connecteur.

En outre, du fait de la déformation transversale des flasques lors du montage du connecteur sur l'élément de montage, il n'est pas possible de monter le connecteur sur l'élément de montage lorsque le connecteur est déjà en position montée dans l'extrémité libre du bras.

Le document EP-A-1.541.434 décrit un tel connecteur qui est monté sur l'axe d'articulation du balai à palonniers par fixation amovible. A cet effet le connecteur comporte des moyens de fixation par clipsage au balai.

Le connecteur comporte en outre des moyens de verrouillage au bras, sous la forme de languettes déformables élastiquement et dont les extrémités libres sont aptes à être reçues dans un orifice complémentaire réalisé dans le dos supérieur de l'extrémité du bras.

Un tel agencement où les moyens de fixation et de verrouillage sont situés sur une seule et même pièce oblige à avoir un connecteur spécifique pour chaque type de balai. Le document WO 0240328 décrit un connecteur selon le préambule de la revendication 1.

L'invention a pour but de proposer un connecteur dont le montage sur le balai et avec le bras est aisé pour l'utilisateur qui ne risque pas de l'endommager. Un autre but de l'invention est de proposer un connecteur dont la structure ne dépend pas de celle du balai.

Dans ce but, l'invention propose un connecteur selon la revendication 1.

Selon d'autres caractéristiques de l'invention :
- la largeur de l'extrémité côté connecteur de la languette est inférieure à la distance entre les deux ailes de l'extrémité du bras de manière que l'extrémité côté connecteur de la languette est apte à être reçue entre les ailes de l'extrémité du bras lorsqu'elle est en position relevée,
- l'extrémité côté connecteur de la languette est réalisée de manière à former une butée longitudinale pour le tronçon d'extrémité inférieure de chaque aile de l'extrémité du bras,
- chaque flasque du connecteur comporte une portion latérale qui est déformable élastiquement et qui est conformée de manière à permettre un montage de l'extrémité du bras sur le connecteur par emboîtement élastique selon un mouvement vertical descendant,
- chaque portion latérale est apte à se déformer transversalement vers l'intérieur du connecteur pour permettre le passage d'un tronçon d'extrémité inférieur associé lors du montage de l'extrémité du bras sur le connecteur, et est apte à revenir élastiquement en position dans laquelle le tronçon d'extrémité inférieure associé est en butée vers le haut contre l'extrémité inférieure de la dite portion latérale ;
- le connecteur comporte un nez avant contre lequel l'extrémité du bras est en butée longitudinalement vers l'avant.

D'autres caractéristiques et avantages de l'invention apparaîtront à la lecture de la description détaillée qui suit pour la compréhension de laquelle on se reportera aux figures annexées parmi lesquelles :
- la figure 1 est une représentation schématique en perspective éclatée d'un agencement de montage d'un balai d'essuyage sur une extrémité d'un bras d'entraînement par l'intermédiaire d'un connecteur selon l'invention ;
- la figure 2 est une vue similaire à celle de la figure 1, montrant le balai d'essuyage en position montée sur l'extrémité du bras par l'intermédiaire du connecteur ;
- la figure 3 est une vue de dessous du connecteur en position monté dans l'extrémité libre du bras ;
- la figure 4 est une vue similaire à celle de la figure 1, montrant une variante de réalisation du connecteur permettant le montage du connecteur dans l'extrémité libre du bras selon une direction verticale ;

Pour la description de l'invention, on adoptera à titre non limitatif les orientations verticale, longitudinale et transversale selon le repère V, L, T indiqué aux figures.

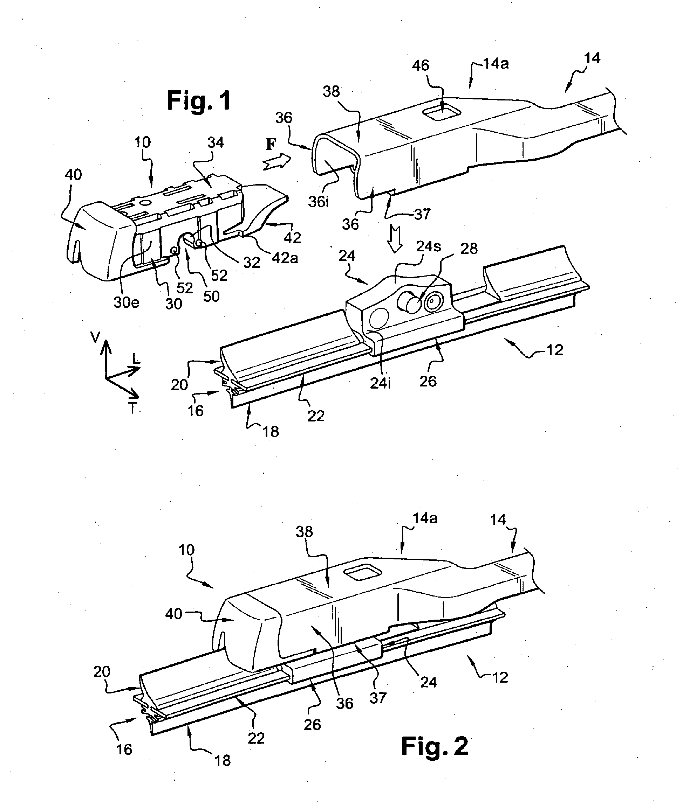

On adoptera aussi l'orientation d'avant en arrière selon la flèche F à la figure 1, à savoir de gauche à droite suivant la direction longitudinale du balai.

Dans la description qui va suivre, des éléments identiques, similaires ou analogues seront désignés par les mêmes chiffres de référence.

On a représenté à la figure 1 un connecteur 10 pour le montage et l'articulation d'un balai d'essuyage 12 d'un panneau vitré de véhicule automobile par rapport à l'extrémité libre 14a d'un bras d'entraînement 14 du balai 12.

Le connecteur 10 est apte à être monté sur un élément de montage 24 du balai 12 distinct du moyen de verrouillage, et il est apte à être monté dans l'extrémité libre 14a du bras 14.

Le balai 12 est un balai à faible épaisseur du type appelé "flat blade" qui comporte une raclette 16 s'étendant longitudinalement, qui est constituée dans sa partie inférieure d'une lame 18 destinée à frotter contre la vitre à essuyer, et dans sa partie supérieure d'un talon de fixation 20.

Le balai d'essuyage 12 comporte aussi deux vertèbres de rigidification 22 qui sont chacune reçues dans une rainure complémentaire réalisée dans un bord latéral du talon 20.

Les vertèbres 22 sont conçues de manière à assurer une rigidité au balai d'essuyage 12 permettant de répartir l'effort d'appui de la raclette 16 contre la vitre à essuyer sur toute sa longueur.

Le balai d'essuyage 12 porte aussi un élément de montage 24 sur lequel le connecteur 10 est monté, et qui est agencé longitudinalement globalement au milieu du balai 12, en chevauchant le talon 20 et les vertèbres 22 du balai 12.

L'élément de montage 24 s'étend globalement longitudinalement verticalement au dessus du talon 20 de la raclette 16, il comporte à son extrémité inférieure 24i deux croches latéraux 26 qui s'étendent globalement vers le bas de manière qu'ils sont répartis transversalement de part et d'autre du dos 20 du balai 12 et de manière à réaliser la fixation de l'élément de montage 24 sur le balai 12.

L'élément de montage 24 comporte deux axes d'articulation 28 latéraux dont chacun fait saillie transversalement par rapport à une face latérale 24a longitudinale verticale de l'élément de montage 24 de manière que les deux axes 28 sont coaxiaux à un axe transversal A d'articulation du balai 12 par rapport à l'extrémité libre 14a du bras 14.

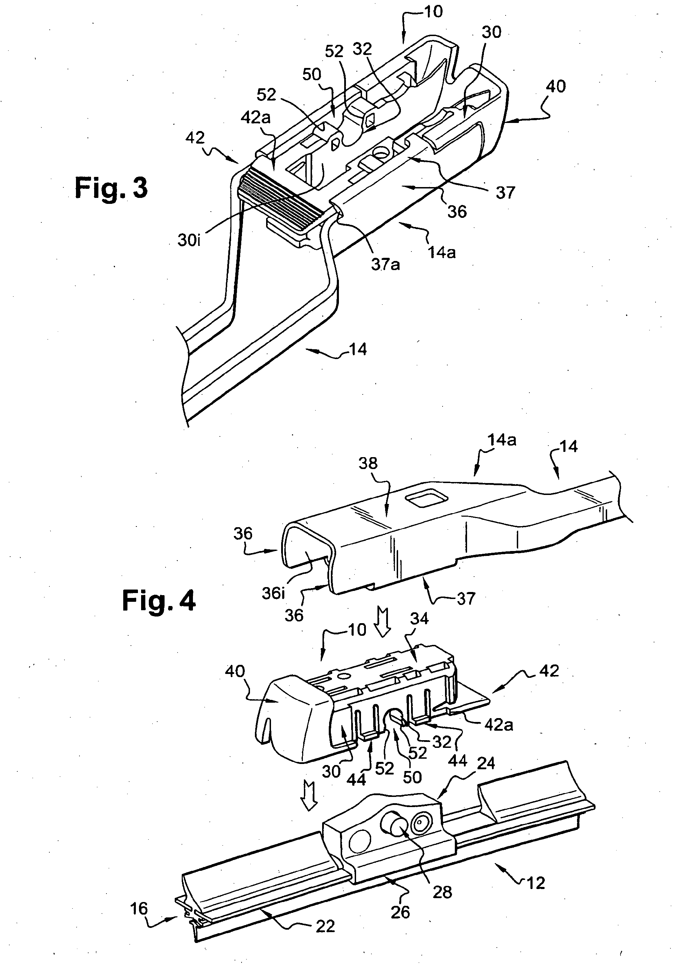

Le connecteur 10 comporte deux flasques latéraux 30 qui s'étendent chacun dans un plan longitudinal vertical, et qui sont aptes à être montés transversalement de part et d'autre de l'élément de montage 24 de manière que chacune des faces longitudinales verticales internes 30i en vis-à-vis des flasques 30 (figure 3) est située en vis-à-vis d'une face latérale 24a de l'élément de montage 24 lorsque le connecteur 10 est monté sur l'élément de montage 24.

Chaque flasque 30 comporte en outre un logement transversal 32 qui est ici ouvert vers le bas c'est-à-dire débouchant à chacune de ses extrémités, dans lequel est reçu à rotation un axe transversal 28 associé de l'élément de montage 24 lorsque le connecteur 10 est en position montée sur l'élément de montage 24, pour réaliser l'articulation du balai 12 par rapport au connecteur.

Le connecteur 10 comporte aussi un dos transversal supérieur 34 qui relie les flasques 30 entre eux et qui est agencé au dessus de l'élément de montage 24 lorsque le connecteur 10 est monté sur l'élément de montage 24.

Conformément à l'invention, chaque flasque latéral 30 comporte une ouverture inférieure 50 qui relie le logement transversal 32 au bord longitudinal inférieur 30i du flasque 30.

Cette ouverture 50 est apte à être traversée par l'axe transversal 28 associé au logement transversal 32 lors du montage du connecteur 10 sur l'élément de montage 24.

L'ouverture 50 est délimitée longitudinalement par deux portions de fixation 52 en vis-à-vis qui sont réalisées de manière que la plus petite distance entre les portions de fixation 52 est inférieure au diamètre de l'axe transversal 28 associé.

Les portions de fixation 52 sont en outre aptes à se déformer élastiquement lors du montage du connecteur 10 sur l'élément de montage 24 et lors du démontage du connecteur 10 d'avec l'élément de montage 24 de manière qu'elles s'écartent l'une de l'autre pour permettre le passage de l'axe transversal 28 associé verticalement au travers de l'ouverture 50 et de manière qu'elles reviennent élastiquement dans leur position initiale empêchant le déplacement vertical de l'axe transversal 28 au travers de l'ouverture 50.

Ainsi, lors du montage du connecteur 10 sur l'élément de montage 24, les flasques 30 du connecteur 10 ne subissent aucune déformation transversale vers l'extérieur du connecteur 10.

Il est par conséquent possible de monter et/ou de démonter le connecteur 10 d'avec l'élément de montage 24 lorsque le connecteur est déjà monté dans l'extrémité libre 14a du bras 14, ou bien avant le montage du connecteur 10 dans l'extrémité libre 14a du bras 14.

Le connecteur 10 est en outre apte à être monté dans l'extrémité libre 14a du bras 14 qui est constituée de deux ailes longitudinales parallèles 36 qui sont reliées par un dos supérieur 38 horizontal, en délimitant ainsi un logement longitudinal ouvert vers l'avant.

Lorsque le connecteur 10 est en position monté dans l'extrémité du bras, la face externe 30e de chaque flasque 30 est globalement en appui contre la face interne 36i en vis-à-vis d'une aile 36, et la face supérieure horizontale 34s du dos transversal 34 du connecteur 10 est en appui vers le haut contre la face horizontale inférieure 38i du dos 38 de l'extrémité du bras.

Comme on peut le voir plus en détail à la figure 3, chaque aile 36 de l'extrémité libre 14a du bras 14 comporte un tronçon d'extrémité inférieure 37 qui est replié transversalement en direction de l'autre aile 36.

Chaque tronçon d'extrémité inférieure 37 est réalisé de manière qu'il s'étend dessous le bord longitudinal d'extrémité inférieure 30a d'un flasque 30 associé lorsque le connecteur 10 est en position montée dans l'extrémité du bras 14 et de manière à venir en butée vers le haut contre ce bord inférieur 30a du flasque 30 associé.

Ainsi, l'extrémité libre 14a du bras 14 délimite un logement globalement cylindrique d'axe principal longitudinal dans lequel les flasques 30 et le dos supérieur 34 du connecteur 10, sont reçus de manière à pouvoir coulisser longitudinalement dans l'extrémité libre 14a du bras 14 pour le montage et/ou le démontage du connecteur 10 d'avec l'extrémité libre 14a du bras 14.

Le connecteur 10 comporte aussi des moyens pour son verrouillage longitudinalement en position montée dans l'extrémité libre 14a du bras 14.

Ces moyens de verrouillage comportent un nez avant 40 qui est apte à venir en butée longitudinalement vers l'arrière contre l'extrémité libre 14a du bras 14, et une languette longitudinale de verrouillage 42 déformable élastiquement pour verrouiller le connecteur 10 en mouvement longitudinalement vers l'avant par rapport à l'extrémité libre 14a du bras 14.

Comme on peut le voir plus en détails à la figure 3, la languette de verrouillage 42 s'étend longitudinalement vers l'arrière depuis le bord d'extrémité inférieure 30a de chaque flasque 30 et elle comporte une extrémité côté connecteur 42a qui est apte à s'appuyer longitudinalement vers l'avant contre un bord en vis-à-vis de l'extrémité libre 14a du bras 14.

De plus, la languette 42 est apte à être déformée élastiquement, de manière que son extrémité côté connecteur 42a est mobile globalement verticalement entre une position de verrouillage dans laquelle elle s'appuie longitudinalement vers l'avant contre un bord en vis-à-vis de l'extrémité libre 14a du bras 14, et une position de déverrouillage dans laquelle l'extrémité côté connecteur 42a de la languette 42 est située transversalement entre les deux ailes 36 de l'extrémité 12a du bras, permettant au connecteur 10 de coulisser longitudinalement vers l'avant.

Ici, lorsque l'extrémité côté connecteur 42a de la languette 42 est en position de verrouillage, elle s'appuie longitudinalement vers l'avant contre le bord d'extrémité longitudinale arrière 37a du tronçon inférieur 37 de chaque aile 36.

L'extrémité côté connecteur 42a de la languette 42 est conformée de manière que sa largeur transversale est supérieure à la distance entre les bords d'extrémité transversale interne 37i en vis-à-vis des tronçons inférieurs et de manière que sa largeur est inférieure à la distance transversale entre les deux ailes 36 de l'extrémité libre 14a du bras 14.

L'extrémité côté connecteur 42a de la languette 42 comporte en outre une portion arrière en forme de rampe qui est apte à s'appuyer contre les tronçons inférieurs 37 lors du montage du connecteur 10 dans l'extrémité libre 14a du bras 14 pour provoquer le déplacement vers le haut de l'extrémité côté connecteur 42a de la languette 42 vers sa position de déverrouillage.

Ainsi, pour le montage du connecteur 10 dans l'extrémité libre 14a du bras 14, la déformation élastique de la languette 42 est provoquée par l'appui de la portion en forme de rampe de l'extrémité côté connecteur 42a de la languette 42 contre les tronçons inférieurs 37.

Par contre, pour le démontage du connecteur 10 d'avec l'extrémité libre 14a du bras 14, la déformation élastique de la languette 42 est provoquée par une action de l'utilisateur sur la portion en forme de rampe de l'extrémité côté connecteur 42a de la languette 42, ce qui garantit notamment le verrouillage du connecteur 10 en position montée dans l'extrémité libre 14a du bras 14.

On a représenté à la figure 4 une variante de réalisation du connecteur 10 permettant de le monter dans l'extrémité libre 14a du bras 14 soit selon un mouvement de coulissement vers l'arrière tel que décrit précédemment, soit selon un mouvement verticalement vers le haut.

Pour cela, selon cette variante de réalisation, chaque flasque 30 comporte une portion 44 déformable élastiquement dont la face longitudinale verticale externe 44e affleure transversalement avec la face longitudinale verticale externe 30e du flasque 30, et qui est apte à s'effacer transversalement vers l'intérieur du connecteur 10 lors du montage du connecteur 10 dans l'extrémité libre 14a du bras 14, en libérant un espace pour le passage du tronçon inférieur 37 d'une aile 36 associée.

La portion 44 du flasque 30 est positionnée longitudinalement globalement au droit du tronçon inférieur 37 de l'aile 36 associée, le tronçon inférieur 37 s'appuie alors contre la portion 44 pour provoquer sa déformation vers l'intérieur du connecteur 10 lors du montage du connecteur 10 dans l'extrémité libre 14a du bras 14, et sa dimension longitudinale est supérieure à celle du tronçon inférieur 37 associé.

Par contre, la portion 44 du flasque 30 est réalisée de manière que lorsque le connecteur 10 est en position montée dans l'extrémité libre 14a du bras 14, le tronçon inférieur 37 associé est en butée vers le haut contre le bord longitudinal inférieur 44i de la portion 44 du flasque 30.

On a représenté aux figures 5 et 6 une autre variante de réalisation du connecteur 10 selon l'invention dans laquelle la languette de verrouillage 42 est formée dans le dos 34 du connecteur 10 et s'étend globalement longitudinalement vers l'avant de manière que son extrémité côté connecteur 42a est apte à être reçue dans un orifice complémentaire 46 du dos supérieur 38 de l'extrémité libre 14a du bras 14.

Ainsi, lorsque le connecteur 10 est en position montée dans l'extrémité libre 14a du bras 14, la languette 42 s'étend dessous le dos supérieur 38 de l'extrémité libre 14a du bras 14.

Pour le démontage du connecteur 10 d'avec l'extrémité libre 14a du bras 14, l'utilisateur agit sur l'extrémité côté connecteur 42a de la languette 42 de manière qu'elle sorte de l'orifice 46 associé selon un mouvement vers le bas. Il est alors possible de faire coulisser le connecteur 10 longitudinalement vers l'avant par rapport à l'extrémité libre 14a du bras 14.

Selon un mode de réalisation préféré de cette variante de réalisation, l'élément de montage 24 est apte à réaliser le verrouillage de l'extrémité côté connecteur 42a de la languette 42 en position dans l'orifice 46 lorsque le connecteur 10 est en position montée sur l'élément de montage 24 du balai 12.

Pour cela, le connecteur 10 est réalisé de manière que lorsqu'il est en position montée sur l'élément de montage 24, l'extrémité côté connecteur 42a de la languette 42 est en butée vers le bas contre une partie supérieure 24s de l'élément de montage 24.

Ainsi, comme on peut le voir plus en détails à la figure 6, lorsque le connecteur 10 est en position montée dans l'extrémité libre 14a du bras 14 et sur l'élément de liaison 24, l'extrémité côté connecteur 42a de la languette 42 est verrouillée en position dans l'orifice 46 du dos supérieur 38 de l'extrémité libre 14a du bras 14, il n'est alors pas possible de démonter le connecteur 10 d'avec l'extrémité libre 14a du bras 14.

Par conséquent, le montage du connecteur 10 dans l'extrémité libre 14a du bras 14 ne peut s'effectuer qu'avant le montage du connecteur 10 sur l'élément de montage 24, et inversement, le démontage du connecteur 10 d'avec l'extrémité libre 14a du bras 14 ne peut s'effectuer que si le connecteur 10 n'est pas en position montée sur l'élément de montage 24.

Un tel assemblage du connecteur 10 sur l'élément de montage 24 postérieurement au montage dans l'extrémité libre 14a du bras 14 est permis par l'ouverture 50 de chaque flasque 30 qui est réalisée de manière que l'introduction des axes 28 dans les logements transversaux 32 associés ne provoque pas de déformation transversale des flasques 30 comme on l'a dit plus haut.

Le connecteur 10 selon l'invention a été décrit et représenté comme étant utilisé pour le montage du balai 12 sur un bras d'entraînement 14 dont l'extrémité libre 14a comporte un orifice 46 réalisé dans son dos supérieur.

Cependant, il sera compris que l'invention n'est pas limitée à ce mode de réalisation, et que le connecteur 10 selon les modes de réalisation représentés aux figures 1, 2 et 4 peut être monté dans une extrémité libre 14a de bras d'entraînement 14 ne comportant pas d'orifice, ou bien dans une extrémité libre 14a d'un bras 14 dont chaque aile 36 comporte un orifice.

En outre, l'élément de montage 24 peut être monté dans des balais de structure différente, comportant par exemple une vertèbre de rigidification 22 destinée à être introduite dans un élément de support comportant en outre des moyens de maintien de la raclette 16.

## Revendications

1. Connecteur (10) d'un balai (12) d'essuyage à un bras d'entraînement (14), le balai s'étendant suivant une direction longitudinale, et le connecteur étant apte à être monté dans l'extrémité libre (14a) du bras (14) et comportant
une partie de fixation munie d'un logement (32) ouvert vers le bas et permettant une fixation amovible suivant une direction verticale du balai (12) avec le connecteur (10), et
un moyen de verrouillage déformable élastiquement ayant une portion apte à réaliser le verrouillage suivant la direction longitudinale du connecteur (10) en position montée dans l'extrémité libre (14a) du bras (14),
la partie de fixation étant destinée à coopérer avec un élément de montage (24) distinct du moyen de verrouillage et fixé à demeure au balai, le moyen de verrouillage comportant une languette (42) s'étendant suivant la direction longitudinale du balai,
le verrouillage longitudinal du connecteur avec le bras étant réalisé par l'extrémité côté connecteur (42a) de la languette (42), située au niveau de la partie inférieure du connecteur,
la languette (42) étant située à l'arrière du connecteur, son extrémité côté connecteur (42a) formant au moins partiellement une butée longitudinale vers l'arrière d'au moins un tronçon (37) d'extrémité associé du bras (14),
l'extrémité côté connecteur (42a) de la languette étant mobile entre une position basse de verrouillage, et une position relevée de déverrouillage, permettant le coulissement longitudinalement vers l'avant du connecteur (10) par rapport au bras (14),
connecteur (10) **caractérisé en ce qu'**il comporte deux flasques (30) latéraux s'étendant chacun dans un plan globalement vertical, les flasques (30) étant aptes à être montés transversalement de part et d'autre de l'élément de montage (24) du balai (12), et chaque flasque (30) comportant un logement transversal (32) qui est apte à recevoir en pivotement un axe transversal (28) d'articulation de l'élément de montage (24), et **en ce que** sur chaque flasque (30) le logement transversal (32) présente une ouverture inférieure (50), délimitée, au moins en partie, par une portion de fixation (52) déformable élastiquement permettant le montage et le démontage du connecteur au balai ainsi que la fixation de l'axe transversal (28) en position montée dans le logement (32).

2. Connecteur (10) selon la revendication 1 , **caractérisé en ce que** la largeur de l'extrémité côté connecteur (42a) de la languette (42) est inférieure à la distance entre les deux ailes (36) de l'extrémité (14a) du bras (14) de manière que l'extrémité côté connecteur (42a) de la languette (42) est apte à être reçue entre les ailes (36) de l'extrémité (14a) du bras (14) lorsqu'elle est en position relevée.

3. Connecteur (10) selon l'une quelconque des revendications 1 et 2, **caractérisé en ce que** l'extrémité côté connecteur (42a) de la languette (42) est réalisée de manière à former une butée longitudinale pour le tronçon (37) d'extrémité inférieure de chaque aile (36) de l'extrémité (14a) du bras (14).

4. Connecteur (10) selon l'une quelconque des revendications précédentes, **caractérisé en ce que** chaque flasque (30) du connecteur (10) comporte une portion latérale (44) qui est déformable élastiquement et qui est conformée de manière à permettre un montage de l'extrémité (14a) du bras (14) sur le connecteur (10) par emboîtement élastique selon un mouvement vertical descendant.

5. Connecteur (10) selon la revendication précédente, **caractérisé en ce que** chaque portion latérale (44) est apte à se déformer transversalement vers l'intérieur du connecteur (10) pour permettre le passage d'un tronçon (37) d'extrémité inférieur associé lors du montage de l'extrémité (14a) du bras (14) sur le connecteur (10), et est apte à revenir élastiquement en position dans laquelle le tronçon (37) d'extrémité inférieure associé est en butée vers le haut contre l'extrémité inférieure (44i) de la dite portion latérale (44).

6. Connecteur (10) selon l'une quelconque des revendications précédentes, **caractérisé en ce qu'**il comporte un nez (40) avant contre lequel l'extrémité (14a) du bras (14) est en butée longitudinalement vers l'avant.

## Patentansprüche

1. Verbinder (10) eines Wischerblatts (12) mit einem Antriebsarm (14), wobei das Wischerblatt sich in einer Längsrichtung erstreckt, und der Verbinder in das freie Ende (14a) des Arms (14) eingebaut werden kann und aufweist
einen Befestigungsbereich, der mit einer Aufnahme (32) versehen ist, die nach unten offen ist und eine lösbare Befestigung des Wischerblatts (12) mit dem Verbinder (10) in einer senkrechten Richtung erlaubt, und
eine elastisch verformbare Verriegelungseinrichtung mit einem Teil, der die Verriegelung des Verbinders (10) in Längsrichtung in der in das freie Ende (14a) des Arms (14) eingebauten Stellung durchführen kann,
wobei der Befestigungsbereich dazu bestimmt ist, mit einem sich von der Verriegelungseinrichtung unterscheidenden und dauerhaft am Wischerblatt befestigten Einbauelement (24) zusammenzuwirken, wobei die Verriegelungseinrichtung eine Zunge (42) aufweist, die sich in der Längsrichtung des Wischerblatts erstreckt,
wobei die Längsverriegelung des Verbinders mit dem Arm über das verbinderseitige Ende (42a) der Zunge (42) durchgeführt wird, das sich in der Ebene des unteren Bereichs des Verbinders befindet,
wobei die Zunge (42) sich an der Rückseite des Verbinders befindet, wobei ihr verbinderseitiges Ende (42a) zumindest teilweise einen Längsanschlag nach hinten mindestens eines zugeordneten Endabschnitts (37) des Arms (14) bildet,
wobei das verbinderseitige Ende (42a) der Zunge zwischen einer tiefen Verriegelungsstellung und einer angehobenen Entriegelungsstellung beweglich ist, die das Längsgleiten des Verbinders (10) nach vorne bezüglich des Arms (14) ermöglicht,
wobei der Verbinder (10) **dadurch gekennzeichnet ist, dass** er zwei seitliche Flansche (30) aufweist, die sich je in einer global senkrechten Ebene erstrecken, wobei die Flansche (30) quer zu beiden Seiten des Einbauelements (24) des Wischerblatts (12) eingebaut werden können, und jeder Flansch (30) eine Queraufnahme (32) aufweist, die eine Gelenkquerachse (28) des Einbauelements (24) schwenkbar aufnehmen kann, und dass an jedem Flansch (30) die Queraufnahme (32) eine untere Öffnung (50) aufweist, die zumindest zum Teil von einem elastisch verformbaren Befestigungsteil (52) begrenzt wird, der den Ein- und Ausbau des Verbinders auf das und von dem Wischerblatt sowie die Befestigung der Querachse (28) in der in die Aufnahme (32) eingebauten Stellung erlaubt.

2. Verbinder (10) nach Anspruch 1, **dadurch gekennzeichnet, dass** die Breite des verbinderseitigen Endes (42a) der Zunge (42) geringer als der Abstand zwischen den zwei Flügeln (36) des Endes (14a) des Arms (14) ist, so dass das verbinderseitige Ende (42a) der Zunge (42) zwischen den Flügeln (36) des Endes (14a) des Arms (14) aufgenommen werden kann, wenn es in der angehobenen Stellung ist.

3. Verbinder (10) nach einem der Ansprüche 1 und 2, **dadurch gekennzeichnet, dass** das verbinderseitige Ende (42a) der Zunge (42) so hergestellt wird, dass ein Längsanschlag für den unteren Endabschnitt (37) jedes Flügels (36) des Endes (14a) des Arms (14) gebildet wird.

4. Verbinder (10) nach einem der vorhergehenden Ansprüche, **dadurch gekennzeichnet, dass** jeder Flansch (30) des Verbinders (10) einen Seitenteil (44) aufweist, der elastisch verformbar und so gestaltet ist, dass er einen Einbau des Endes (14a) des Arms (14) auf den Verbinder (10) durch elastisches Ineinanderfügen gemäß einer senkrechten Bewegung nach unten erlaubt.

5. Verbinder (10) nach dem vorhergehenden Anspruch, **dadurch gekennzeichnet, dass** jeder Seitenteil (44) sich quer zum Inneren des Verbinders (10) verformen kann, um den Durchgang eines zugeordneten unteren Endabschnitts (37) beim Einbau des Endes (14a) des Arms (14) auf den Verbinder (10) zu erlauben, und elastisch in die Stellung zurückkommen kann, in der der zugeordnete untere Endabschnitt (37) nach oben gegen das untere Ende (44i) des Seitenteils (44) in Anschlag ist.

6. Verbinder (10) nach einem der vorhergehenden Ansprüche, **dadurch gekennzeichnet, dass** er eine vordere Nase (40) aufweist, gegen die das Ende (14a) des Arms (14) in Längsrichtung nach vorne in Anschlag ist.

## Claims

1. Connector (10) for a windscreen wiper blade (12) with a driving arm (14), the blade extending in a longitudinal direction, and the connector being suitable for being mounted in the free end (14a) of the arm (14) and comprising
a fixing part provided with a housing (32) open towards the bottom and allowing the blade (12) to be removably fixed in a vertical direction with the connector (10), and
an elastically deformable locking means having a portion suitable for producing the locking in the longitudinal direction of the connector (10) in the position mounted in the free end (14a) of the arm (14),
the fixing part being intended to cooperate with a mounting element (24) distinct from the locking means and permanently fixed to the blade, the locking means comprising a tongue (42) extending in the longitudinal direction of the blade,
the longitudinal locking of the connector with the arm being produced by the connector side end (42a) of the tongue (42), situated at the bottom part of the connector,
the tongue (42) being situated at the rear of the connector, its connector side end (42a) at least partially forming a longitudinal abutment towards the rear of at least one associated end section (37) of the arm (14),
the connector side end (42a) of the tongue being able to move between a locking bottom position, and a raised unlocking position, enabling the connector (10) to slide longitudinally forwards relative to the arm (14),
the connector (10) being **characterized in that** it comprises two side plates (30) each extending in an overall vertical plane, the plates (30) being suitable for being mounted transversally on either side of the mounting element (24) of the blade (12), and each plate (30) comprising a transversal housing (32) which is suitable for receiving, by pivoting, a transversal articulation axis (28) of the mounting element (24), **and in that** on each plate (30) the transversal housing (32) has a bottom opening (50), delimited, at least partly, by an elastically deformable fixing portion (52) allowing the connector to be mounted on and removed from the blade and the transversal axis (28) to be fixed in the position mounted in the housing (32).

2. Connector (10) according to Claim 1, **characterized in that** the width of the connector side end (42a) of the tongue (42) is smaller than the distance between the two wings (36) of the end (14a) of the arm (14) such that the connector side end (42a) of the tongue (42) is suitable for being received between the wings (36) of the end (14a) of the arm (14) when it is in the raised position.

3. Connector (10) according to any one of Claims 1 and 2, **characterized in that** the connector side end (42a) of the tongue (42) is produced in such a way as to form a longitudinal abutment for the bottom end section (37) of each wing (36) of the end (14a) of the arm (14).

4. Connector (10) according to any one of the preceding claims, **characterized in that** each plate (30) of the connector (10) comprises a lateral portion (44) which is elastically deformable and which is shaped in such a way as to allow the end (14a) of the arm (14) to be mounted on the connector (10) by elastic fitting by a downward vertical movement.

5. Connector (10) according to the preceding claim, **characterized in that** each lateral portion (44) is suitable for being transversally deformed towards the inside of the connector (10) to allow the passage of an associated bottom end section (37) when mounting the end (14a) of the arm (14) on the connector (10), and is suitable for reverting elastically to the position in which the associated bottom end section (37) is in abutment towards the top against the bottom end (44i) of said lateral portion (44).

6. Connector (10) according to any one of the preceding claims, **characterized in that** it comprises a front nose (40) against which the end (14a) of the arm (14) is in abutment longitudinally towards the front.
